# NEW EUROPEAN PATENT SPECIFICATION

(11) **EP 0 126 518 B2**
(45) Date of publication and mention of the opposition decision: **10.05.2000**
(45) Mention of the grant of the patent: 11.10.1989
(21) Application number: 84200986.2
(22) Date of filing: 26.05.1982
(51) Int. Cl.: A01D 34/66

(54) **A mowing machine**
Mähmaschine
Faucheuse

(30) Priority: 27.05.1981 NL 8102592
(43) Date of publication of application: 28.11.1984
(62) Divisional of application: 82200642.5
(73) Proprietor: C. van der Lely N.V., 3155 PD Maasland (NL)
(72) Inventor: Van der Lely, Ary, Maasland (NL); Bom, Cornelis Johannes Gerardus, Rozenburg (NL)
(74) Representative: Corten, Maurice Jean F.M.

(56) References cited:
- AT-B- 317 594
- DE-A- 2 801 440
- DE-A- 2 822 686
- DE-A- 2 825 665
- GB-A- 2 059 236

## Description

This invention relates to a mowing machine comprising a plurality of rotary cutting units mounted to a main frame so as to be drivable about upwardly extending axes, wherein (a) the main frame extends, during operation of the machine, transverse to the operative travel (A) of the machine and comprises at least one driving unit having a housing, b) said driving unit supports at least one cutting unit and drive means therefore, and c) the driving unit comprises a releasable shoe, extending forwardly, with respect to the normal direction of operative travel of the machine, along the bottom of the driving unit to its front side, protecting means being situated in front of the driving unit, below the cutting unit, the protecting means and the front side of the shoe being rigidly secured together, wherein the releasable shoe is mounted, with respect to the normal direction of operative travel of the machine, to the rear side of the driving unit and is extending from the rear side of the driving unit to its frontside, and in that the protecting means and the front side of the shoe are fitted around and over the forwardly protruding leading edge of the housing of the driving unit and the shoe is curved upwardly behind the rear wall of the driving unit and is fastened only at the said rear wall thereto by two bolts, such that the shape of the shoe generally follows the form of the front, underneath and rear surfaces of the housing of the driving unit and that only the shoe is merely hooked around the leading edge.

Before the priority date of the invention a mowing machine manufactured by P.J. Zweegers en Zonen Landbouwmachinefabrieken B.V. of the type FALAZET 185 was sold. Said mowing machine was provided with a releasable shoe. Said releasable shoe is mounted, with respect to the normal direction of operative travel of the machine, to the rear side of the driving unit and is extending from the rear side of the driving unit to its frontside and the protecting means and the front side of the shoe are fitted around and over the forwardly protruding leading edge of the housing of the driving unit.

This known machine had the disadvantage that the connection of the shoes to the driving unit can come into contact with obstacles on the ground, owing to which this connection can be damaged and weared.

The aim of the invention is to improve this machine and according to the invention the shoe is curved upwardly behind the rear wall of the driving unit and is fastened only at the said rear wall thereto by two bolts, such that the shape of the shoe generally follows the form of the front, underneath and rear surfaces of the housing of the driving unit.

The GB-A-2 059 236 shows a protecting means protecting the respective cutting unit from the lower side thereof being formed, relative to the normal direction of operative travel of the machine, at the front side of the driving unit. A shoe being bolted to the rear side of the driving unit and is extending forwardly along the bottom of the driving unit to the front side thereof to be fitted around a tie member connecting the driving units together. In this known construction the driving units are large and relatively complicated as the protecting means are part of the driving units. Also here the connection of the shoes to the tie member below the top front side of the driving unit can come into contact with obstacles on the ground, owing to which this connection can be damaged and weared.

The DE-A-2 825 665 shows a known construction whereby the frame beam is constructed of two angled plates, the upper of which is provided with forwardly extending parts forming protecting means for the respective cutting unit. Shoes are provided to the lower side of the frame beam, which shoes are connected with bolt means to the lower side of the protecting means. Also in this known construction the protecting means are part of the frame beam making the same wider and more complicated to fabricate. The bolt means connecting the shoes to the lower sides of the front ends of the protecting means can also easily be damaged and wear, during operation of the machine, by meeting obstacles and other members on the ground.

For a better understanding of the present invention and to show how it may be carried into effect, reference will now be made, by way of example, to the accompanying drawings, in which,
Figure 1 is a plan view of a mowing machine hitched to a tractor;
Figure 2 is a plan view of part of the mowing machine of Figure 1 on an enlarged scale;
Figure 3 is a plan view of a further part of the mowing machine of Figure 1 on an enlarged scale;
Figure 4 is a partly sectional view taken in the direction of the arrow IV in Figure 2;
Figure 5 is a sectional view taken on the line V―V in Figure 2;
Figure 6 is a sectional view taken on the line VI―VI in Figure 2;
Figure 7 is a sectional view taken on the lines VII―VII in Figure 2;
Figure 8 is a sectional view taken on the line VIII―VIII in Figure 2; and
Figure 9 is a schematic plan view of the mowing machine of Figures 1 to 8.

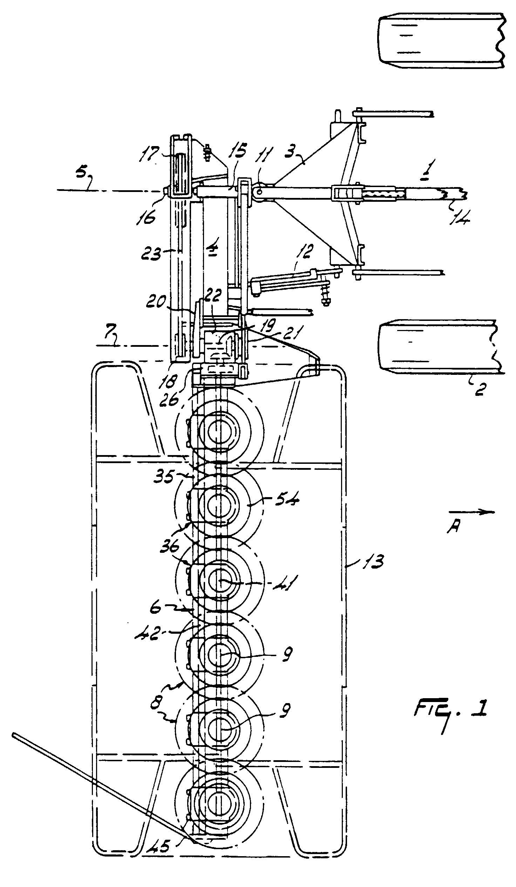

The mowing machine shown in Figure 1 comprises a fastening trestle 3 which is hitched to a three-point lifting device 1 of a tractor 2. At the rear, the trestle 3 carries an intermediate frame 4, which is pivotable with respect to the trestle 3 about a substantially horizontal pivotal axis 5 extending in the intended direction of operative travel of the machine, as indicated by an arrow A in Figures 1, 2 and 9. In the illustrated embodiment, the axis 5 lies substantially in the vertical, longitudinal central plane of the tractor 2. The intermediate frame 4 extends away from the axis 5 transversely of the direction A to a position substantially level with a lateral boundary face of the tractor 2.

A main frame 6 is connected to the end of the intermediate frame 4 away from the pivotal axis 5 and is pivotable with respect to the intermediate frame 4 about a pivotal axis 7. The axis 7 is parallel to the axis 5 and is located just within the lateral boundary of the tractor 2. Viewed on plan, the main frame 6 is in line with the intermediate frame 4 and thus also extends transversely of the direction A.

In the illustrated embodiment the main frame 6 carries six cutting units 8, which are drivable in rotation about upwardly directed rotary axes 9. The rotary axes 9 may be vertical, but preferably they are tilted slightly forwards, with respect to the direction A, from bottom to top. Each cutting unit 8 is provided with one or more outwardly extending cutters 10. The tip of a cutter 10 of the cutting unit nearest the intermediate frame 4 described a circle which extends substantially up to the nearest boundary face of the tractor 2, that boundary face being parallel to the direction A.

The intermediate frame 4 and the main frame 6 are pivotable with respect to the trestle 3 about an upwardly directerd pivotal axis 11 which lies substantially in the vertical longitudinal central plane of the tractor 2 and which provides the connection between the intermediate frame 4 and the trestle 3. In normal operation, pivoting about the axis 11 is prevented by an overload mechanism 12 which is arranged at a distance from the central longitudinal plane of the tractor and connects the intermediate frame 4 to the trestle 3.

A framework 13 extends over the main frame 6. Flexible walls are suspended from the periphery of the framework 13 and extend to the ground to the protect bystanders against objects such as stones which might be thrown up by the cutting units 8.

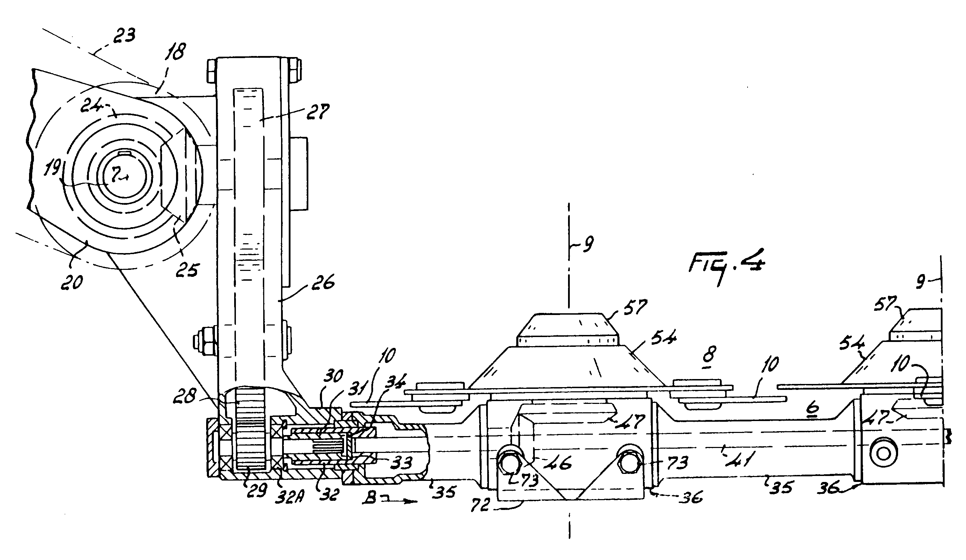

The mowing machine has an input shaft which is journalled in a sleeve 15 and which can be connected to the power take-off shaft of the tractor 2 by an auxiliary shaft 14. The sleeve 15 is rigidly secured to the intermediate frame 4 and extends substantially horizontal in the direction A. The axis of the input shaft 16 coincides with the pivotal axis 5. The input shaft 16 projects from the rear end of the sleeve 15 and the projecting portion carries a pulley 17. Near the end of the intermediate frame 4 adjacent the main frame 6 there is a pulley 18 which is mounted on a shaft 19 journalled in lugs 20 and 21 provided on the intermediate frame 4 and in a gear box 22. The gear box 22 is pivotable with respect to the lugs 20 and 21 and is rigidly secured to the main frame 6. The axis of the shaft 19 coincides with the pivotal axis 7. The pulley 17 is drivably connected separate to the pulley 18 by means of one or more V belts 23 running around the two pulleys. The diameter of the pulley 17 is larger (for example three times larger) than the diameter of the pulley 18. The shaft 19 carrying the pulley 18 is provided with a bevel gear wheel 24 (Figure 4), which meshes with a bevel gear wheel 25, whose rotary axis, which is substantially horizontal during operation, intersects the pivotal axis 7 at right angles. The gear wheel 25 is journalled in a substantially vertical gear box 26, which is rigidly secured to the gear box 22. The shaft of the bevel gear wheel 25 is provided with a gear wheel 27 which is located inside the gear box 26 and meshes with an intermediate gear wheel 28 disposed below it. The intermediate gear wheel 28 meshes with a gear wheel 29 disposed beneath it. The rotary axes of the gear wheels 27, 28 and 29, which are all spur gears, are parallel to one another and located vertically one above the other. The diameter of the bevel gear wheel 24 is significantly larger than the diameter of the bevel gear wheels 25, and the substantially equal diameters of the gear wheels 27 and 29 are considerably larger than the diameter of the lower gear wheel 29. The gear box 26 has at the bottom an outwardly projecting collar 30 (Figure 4), which surrounds the shaft of the gear wheel 29 extending in the same direction. The outwardly directed end part of the shaft of the gear wheel 29 is provided with axial splines co-operating with further axial splines on the inside of a sleeve 31 which fits over the protruding shaft portion of the gear wheel 29 and is located inside the collar 30. The end of the sleeve 31 facing the gear wheel 29 abuts a bearing 32A which is located between the sleeve 31 and the gear wheel 29 and is one of the bearings supporting the gear wheel 29. The end of the sleeve 31 away from the bearing 32A projects beyond the outer end of the shaft bearing the gear wheel 29. The sleeve 31 is surrounded by part of a tie piece 32 having a bore, opening towards the gear wheel 29, which grips the sleeve 31. This part of the tie piece 32 is rotationally connected with the sleeve 31 in a manner not shown, for example, by means of splines. The part of the tie piece 32 away from the gear wheel 29 is also shaped as a sleeve, but with a smaller diametral dimension. This part defines an outwardly opening recess having a square transverse cross-section. This square recess opens into the bore at a shoulder 33. Before slipping the tie piece 32 onto the sleeve 31, a supporting plate 34 is disposed on the shoulder 33, so that this plate 34 is clamped between the sleeve 31 and the shoulder 33.

The main frame 6 is clamped to the collar 30 in a manner to be described more fully later, and extends outwardly away from the collar.

Before describing in detail the construction and assembly of the main frame, the associated driving units and the cutting units, the general structure of the main frame will be discussed. The main frame 6 is made up of a sequence of separate parts comprising (beginning at the collar 30) a separate intermediate piece 35 (Figure 4), a separate driving unit 36 (comprising a rotatable part at the top forming the cutting unit 8), an intermediate piece 35, another driving unit 36 (again comprising a rotatable cutting unit 8), an intermediate piece 35 and so on. The outermost part in this sequence is a driving unit terminated by an end piece to be described more fully later. The intermediate pieces 35 are separate parts which may have identical shapes and dimensions to each other. As viewed in the direction B (Figure 4) or in the opposite direction, the end faces of the intermediate pieces 35 all have the same shape and dimensions. The lengths of the intermediate pieces 35 measured in the direction B may be the same for all of the intermediate pieces, but they can alternatively be wholly or partly different. Basically the driving units 36 are identical. This also applies to the cutting units 8 provided on the driving units 36, but the lengths of the cutters 10 may be different for different cutting elements.

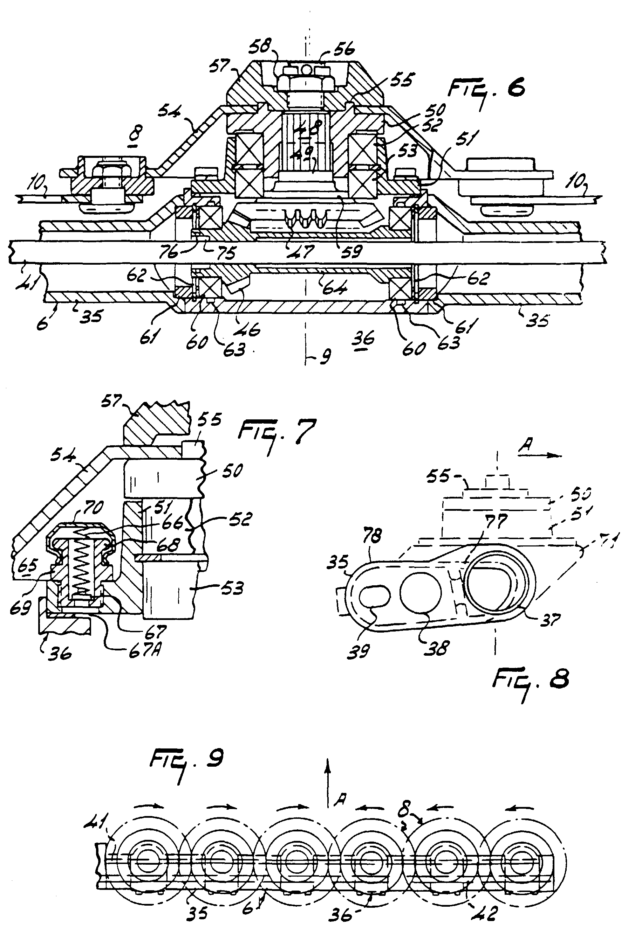

For the sake of clarity, Figure 8 is an elevational view, in the direction opposite the direction B. The solid-line part of Figure 8 applies to all of the intermediate pieces 35. The solid-line part of Figure 8 together with the broken-line part applies to an elevational view of a driving unit 36 taken opposite the direction B. The intermediate pieces 35 and the housings of the driving units 36 are made from, for example, cast iron. Figure 8 shows that the lateral boundary faces of the intermediate pieces 35 and of the driving units 36 have three holes 37, 38 and 39. These holes extend in the direction B across the part concerned up to the other boundary face. The hole 37 serves to receive a single main shaft 41 extending in the direction B through all of the intermediate pieces 35 and driving units 36. The hole 38 serves to receive a tie member in the form of a tie rod 42 which also extends through all of the intermediate pieces 35 and driving units 36. This tie rod is heavily loaded in tension and is anchored at its ends on the inner and outer driving unit or intermediate piece respectively in the collar 30 so that all driving units and intermediate pieces are subjected to a compressive force parallel to the direction B which is equal to the tensile force in this tie rod.

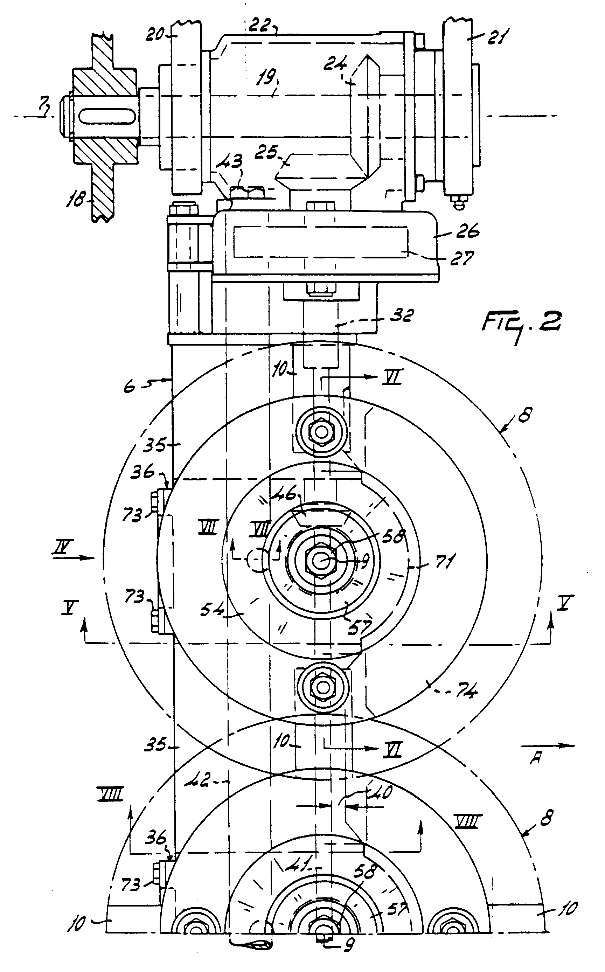

The hole 38 for receiving the tie rod is located approximately at the middle of the dimension of the end face in the direction A so that the compressive force exerted by the tie rod on the intermediate pieces and driving units act centrally in order to avoid gaps between the intermediate pieces and the driving units and in order to obtain an assembly which is resistant to bending, whilst the entire mating surface of each intermediate piece and driving unit is uniformly loaded. On the side of the hole 38 away from the hole 37 the end face of each intermediate piece and driving unit has a hole 39. This hole 39 is important in the manufacture of the castings for releasing the cores of the castings. The wall thickness of each intermediate piece and driving unit is relatively small so that a large hollow space can be enclosed and the weight can be kept low, while the structural rigidity is sufficient. The general form of the intermediate pieces and the housings of the driving units, as viewed in the direction A, is shown in Figure 4. In the central region of each intermediate piece 35 the vertical and transverse dimensions are smaller than in the short regions near the adjacent driving units. In particular, it is significant that the central region of the leading edge of the intermediate piece 35 is set back from the end regions of the leading edge. The plan view of Figure 2 indicates the distance 40 measured in the direction A between the leading edge of an intermediate piece 35 (viewed on plan) and the foremost boundary of the main driving shaft 41 of the main frame. In order to maximize the amount by which the central region of the leading edge of the intermediate piece is set back from the end regions, the dimension 40 is minimized and is substantially equal to the wall thickness of the casting of the intermediate piece. Consequently, the leading edge is close to the opening for the main driving shaft. Thus, when the cutters of neighbouring driving units are rotating in opposite senses, (as shown by way of example in Figure 2) sticking of crop cuttings which form in practice into a growing crust on the leading edge of a frame part in the region where the cutters of two adjacent driving units move backwards) can occur without being able to increase forwardly to a point where the circles described by the outermost tips of the cutters intersect, where the crust would adversely affect the mowing operation. The dimension between the leading edge of the intermediate piece and the point of intersection of the mowing circles is too large to be covered by the sticking crop cuttings, since the front portion of the crust is constantly breaking off to an extent such that bridging the gap between the leading edge of the intermediate piece and the point of intersection of the mowing circles cannot occur.

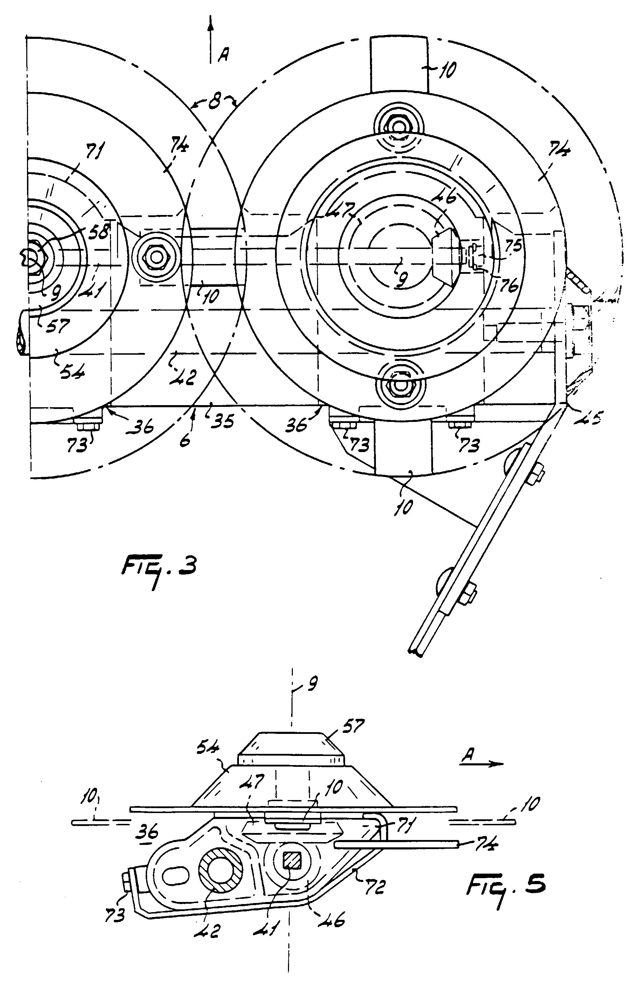

The tie rod 42 is shown in Figures 2 and 5. The tie rod 42 extends through all of the intermediate pieces and driving units and comprises a seamless, drawn, thick-walled tube. Alternatively a differently shaped tube or solid rod may be used. At the inner end of the main frame 6 the tid rod 42 is provided with a welded head 43 (Figure 2) bearing on the surfaces of the gear box 26 directed towards the intermediate frame 4. As shown in Figure 4, the tie rod 42 is thus located behind the axis of the gear wheel 29, with respect to the direction A. The two upwardly directed walls of the gear box 26 have holes through which the tie rod 42 passes. From Figure 3 it will be appreciated that the outermost end of the tie rod 42 has an internal screwthread receiving a bolt 44. The head of the bolt bears on the outer surface of an end piece 45 in the form of a plate which is in contact with the outer end face of the outermost driving unit 36. The length of the tie rod 42 is such that a small space is left between its outer end and the inner surface of the end piece 45. By tightening the bolt 44 to a maximum torque of, for example, 24 kgs/m the tie rod 42 is placed under tension so that it exerts, through the end piece 45, a compressive force on the intermediate pieces and driving units. The end piece 45 extends rearwardly and slopes inwardly (Figure 3) to provide a support for a swath board for defining the outer edge of the mown swath of crop deposited behind the machine in operation. Under the action of the compressive force applied by the tie rod 42, the intermediate element 35 located nearest to the gear box 26 bears, through an intermediate ring, on the collar 30, whose outer face matches the contacting face of the intermediate ring.

Figure 6 shows one of the driving units 36 clamped between two intermediate pieces 35 (see the side elevation of Figure 8 as a whole). The main drive shaft 41 passing through all of the intermediate pieces 35 and driving units 36 is a solid shaft of non-circular cross-section. In the illustrated embodiment the shaft 41 has a square cross-section, but it could alternatively be rectangular, hexagonal or circular with a flat side or a key way. The sides of the square cross-section are 12 mms long. In each driving unit 36 the shaft 41 passes through a matching square hole in a bevel gear wheel 46, which meshes with a bevel gear wheel 47, the axes of these bevel gear wheels intersecting each other at right angles. The gear wheel 46 has 16 teeth and the gear wheel 47 has 33 teeth. A shaft 48 extends upwardly from the gear wheel 47 and has a cylindrical part 49 which is in close contact with the cylindrical inner boundary of a hub 50 of the associated cutting unit 8. The interface between the cylindrical portion 49 and the inner wall of the hub 50 thus constitutes a centering face for the position of the hub 50.

A locking ring 51 is bolted to the casting forming the housing of the driving unit 36. The locking ring 51 is also a casting and has an L-shaped radial cross-section. The inner surface of the locking ring 51 is smoothly reamed and receives two bearings 52 and 53 disposed one above the other. The inner races of the bearings 52 and 53 support the outer surface of the lower part of the hub 50. The top part of the hub 50 has a flange extending over the upper bearing 52. The top surface of the flange serves as a supporting surface for an annular cutter holder 54, which slopes downwardly on all sides away from the outer periphery of the top part of the hub 50 and then extends as a flat ring at right angles to the centreline of the shaft 48. The flat ring carries, in this embodiment two mowing cutters 10 disposed diameterially opposite each other. Each of the cutters 10 is fastened to the cutter holder 54 in a pivotable manner by means of a bolt which is parallel to the centreline of the shaft 48. The inner periphery of the upper and inner part of the cutter holder 54 defines a square hole which is a close fit over a raised part 55 of square shape, as viewed on plan, on the top surface of the hub 50.

The shaft 48 comprises a splined portion located inside the hub 50 and above the cylindrical part 49. The splines cooperate with further splines in the inner periphery of the hub 50. Above the splined portion the shaft 48 has a screwthreaded portion 56. A cap 57 is fitted over the screwthreaded portion 56 to secure the central part of the cutter holder 54. The cap 57 has a recess on the underside which receives the square raised part 55 of the hub 50. A nut 58 is screwed onto the screwthreaded portion 56 to clamp the cap 57 to the cutter holder 24 and to the top surface of the hub 50.

The inner race of the lower bearing 53 bears on a shoulder 59 of the shaft 48, this shoulder constituting a centering surface which is located directly above the gear wheel 47 so that the lower bearing 53 extends deeply into the housing of the driving unit 36 so that the total height of the cutting unit can be limited, which is conducive to stability in operation. The gear wheel 46 is journalled in a bearing 60, the outer race of which is supported in the hole 37 of the casting forming the housing of the driving unit 36. On the side of the bearing 60 facing the adjacent intermediate piece 35 there is a locating ring 61 which is arranged in the hole 37 and projects from the end face of the casting. Between the bearing 60 and the locating ring 61 there is a Seeger ring (circlip) 62 located in a groove in the wall of the hole 37. A seal 63, for example, formed by an O-ring, is arranged between the outer race of the bearing 60 and the boundary of the hole 37. As viewed in Figure 6 a bearing 60, an O-ring 63, a Seeger ring (circlip) 62 and a locating ring 61 are provided in a similar arrangement on the other side of the driving unit 36.

The gear wheel 46 is integral with a sleeve 64 extending towards the bearing 60 further from the gear wheel 46, which bearing is axially supported on a shoulder provided at the end of the sleeve 64. The Seeger rings (circlips) 62 prevent the bearing 60 from moving outwardly of the driving unit 36.

The space around the gear wheels 46 and 47 are filled with lubricant such as grease. The presence of the sleeve 64 results in the grease-filled part of the driving unit 36 being held within a closed space so that the grease cannot penetrate to the interior of the sleeve 64. Consequently, if the main drive shaft 41 is removed and the driving unit 36 is used as a separate unit, the grease cannot leave the driving unit.

In Figure 6, the gear wheel 46 is shown on the left-hand side of the axis 9 of the shaft 48. The locating ring 61 is a sliding fit allowing movement of the ring in the hole 36 so that, when the driving unit 36 is used as a separate unit, the ring can be readily removed. After the removal of the Seeger ring (circlip) 62 the bearing 60 can also be removed, since the bearing 60 is held in place by the Seeger ring (circlip) and the sleeve 64 rather than by the fit of the bearing 60 in the housing of the driving unit. These conditions also apply to the centering ring 61, the Seeger ring (circlip) 62 and the bearing 60 on the right-hand side in Figure 6. This means that the gear wheel 46 and the sleeve 64 can be removed and replaced the other way round, the gear wheel 46 then being on the right-hand side, as viewed in Figure 6 so that it engages the opposite side of the gear wheel 47. When the main drive shaft 41 is driven in the same direction as before, the cutting unit 8 is driven in the opposite direction of rotation.

Since the lubricant contained in the driving unit 36 is confined in a closed space, it is necessary to provide vent means shown in Figure 7. A holder 65 is screwed into a tapped hole in the locking ring 51. The holder 65 has a bore communicating with the space around the gear wheels 46 and 47. The bore contains a compression spring 66. On the underside the compression spring 66 bears on the top side of a plunger 67, the underside of which bears on a shoulder in the continuous bore in the holder 65. At the top the holder 65 has a discontinuous collar 68 below which there is a second discontinuous collar 69, which bears on the locking ring 51 in the mounted state. The top end of the spring 66 is in contact with the underside of a cap 70 of readily deformable material such as brass which is fined over the upper collar 68 and crimped, by means of pincers, in the region between the two collars 68 and 69. The cap 70 is crimped only on two opposite sides, the and consequently between the crimped parts the cap is slightly deformed outwardly so that an aperture is formed extending from the bore of the holder 65 along the discontinuous collar 68 to the region between the two collars and thence to the open air. The spring 66 normally holds the flap 67 closed, but when heat is developed inside the driving unit 36 the lubricant, which then tends to expand, can lift the flap 67 and escape through an aperture 67A to the bore of the holder 65 and along the path described above. The escaping lubricant is in general formed by a mixture of air and grease particles. After the cutter holder 54 is removed, the holder 65 can be unscrewed and, if necessary, the driving unit may be replenished with grease through the opening thus formed.

From Figures 2 and 8 it will be appreciated that, viewed in the direction of movement A, the leading edges of the tops of the driving units are located in front of the leading edges of the adjacent intermediate pieces 35. This is a consequence of the shaft 48 of the cutting unit 8 of each of the driving units being placed as far forward as possible with respect to the neighbouring intermediate pieces in order to obtain, in the opposite direction of rotation of the cutting units 8, an overlap of the cutters located as far as possible in front of the leading edge of the adjacent intermediate piece 35. An additional consideration, as referred to above, is the effect of a growth of a layer of crop cuttings settling on the leading edge of the intermediate piece. In Figure 2 the leading edges of the top parts of the housings of the driving units 36 protruding in front of the leading edges of the intermediate pieces are designated by reference numeral 71. Viewed on plan in Figure 2 the leading edge of each driving unit is arcuate and subtends an angle of about 150° or more in front of the leading edge of the adjacent intermediate piece. From the leading edge 71, the front wall of each driving unit is inclined downwards from the front to rear and adjoins on the underside the underside of the driving unit (Figure 8).

Each driving unit 36 comprises a releasable shoe 72, the shape of which, in side view, generally follows the form of the front, underneath and rear surfaces of the housing of the driving unit (Figure 5). The shoe 72 fits around the leading edge 71 of the driving unit and then slopes downwards and rearwards; subsequently it extends over the bottom face of the housing and curves upwardly behind the rear wall of the housing. This shoe 72 is fastened to the housing only at the rear by two bolts 73. The shoe 72 not only provides a sliding and wear-resistant surface for the driving unit (the bottom face of each adjacent intermediate piece 35 is located above the ground as can be seen, for example, from Figures 4 and 6), but also enables a protecting plate 74 (Figure 5), to be rigidly secured to the front of the shoe 72. The protective plate 74 is fastened at a distance of about 2 to 3 cms, preferably about 2.5 cms, below the outer edge of the cutter holder 54 and extends parallel to the outer edge of the cutter holder 54. The width of the protective plate 74, measured in the direction B (Figure 4), is substantially equal to that of the driving unit and, viewed on plan, the outer boundary of the plate 74 approximately corresponds with that of the outer edge of the cutter holder 54. The plate 74 protects the cutting unit 8 from stones and other objects which might otherwise penetrate below the cutters 10 to the driving unit and damage the cutting unit 8 by an upward movement.

The main drive shaft 41 of the mower is made from a single length of material and extends from the collar 30 of the gear box 26 to the outer side of the outermost driving unit. This shaft is comparatively very thin and this thinness of the shaft appreciably contributes to the low value of the dimension 40 in Figure 2. The polar moment of resistance of the main driving shaft 41 amount to about 0.36 cm³ and transfers in normal operation a power of about 30 HP (22 kW) with a torsional moment of about 230 kgs/cm (2220 Ncm). This comparatively low torsional moment and the consequent small diameter of the main drive shaft 41 can be attained by driving the shaft 41 at a comparatively high speed of revolution. At a speed of the power take-off shaft of the tractor of 540 rev/min the shaft 19 is driven, in the illustrated embodiment, at a speed of 1370 rev/min owing to the ratio between the diameters of the pulleys 17 and 18. The transmission ratio between the gear wheels 24 and 25 (23 and 15 teeth respectively) and the transmission ratio between the gear wheels 27, 28 and 29 (77, 77 and 17 teeth respectively) provide a speed of the drive shaft 41 of about 9500 rev/min. Owing to the transmission ratio between the gear wheels 46 and 47 (16 and 33 teeth respectively), the speed of each shaft 48 (and hence of each cutting unit 8) will be about 4600 rev/min. The speed of revolution of the input shaft 16 of the machine is thus first converted into the high value of the speed of the shaft 41 and then reduced. Depending on the diameter of the circle described by the tips of the cutters 10 (for example, about 30 cms for adjacent cutting units 8 rotating in the same direction and 35 or more for adjacent cutting units rotating in opposite directions) the tips of the cutters move at about 70 to 85 ms/sec.

An important advantage of the comparatively thin main drive shaft 41 is that, during operation, this shaft can withstand an appreciable torsional deformation. With an overall length of the shaft 41 of 165 cms the angular displacement between the ends of the shaft is slightly more than 9° in normal operation. The total permissible angular displacement between the ends of the shaft is about 46° before the yield point of the material is reached. The elasticity of the shaft 41 enables external forces exerted on the cutting units by impact with obstacles such as stones and the like to be absorbed without resulting in damage to the of machine. The safety factor up to the yield point of the shaft 41 is approximately 5. Also in the case of a jolting start and running down of the rotating cutting units the elasticity of the shaft 41 is important.

As shown in Figure 6, each gear wheel 46 has a cylindrical cavity 75 which opens to the outside on the side facing the outer side of the driving unit. The cylindrical wall of the cavity 75 has a continuous groove 76. The cavity 75 and the groove 76 are only used in the outermost driving unit 46 as is shown in Figure 3. In this outermost driving unit the gear wheel 46 is arranged on that side of the driving unit which is furthest from the gear box 26, since the cutters 10 driven by this driving unit have to move inwardly at the front of the machine. The cavity 75 is, therefore, open to the outside. The continuous groove 76 can receive a Seeger ring (circlip) which provides a stop in outward direction for the adjacent end of the main drive shaft 41. The inner end of the shaft 41 is located by abutment with the supporting plate 34 mentioned above with reference to Figure 4. In this way the shaft 41 is prevented from moving axially (except for a small clearance) and it is retained axially by stops which rotate with the shaft so that they do not give rise to wear.

The cutting unit 8 arranged on the outermost driving unit 36 (that is to say at the free end of the main frame 6) is preferably provided with a differently shaped cutter holder 54 and hub 50, the cutter holder 54 measured in a vertical direction being appreciably higher than the cutter holders shown in Figures 4 and 6, that is to say, preferably 2 to 4 times higher than the cutter holders shown. The general design may be the same, i.e. an upwardly converging truncated cone. The reason for this is that the outermost cutter holder 54, the front side of which moves inwardly, contributes to the establishment of the lateral edge of the mown swath. The hub 50 is also higher, whilst the same cap 57 can be used as in the other cutter holders.

When viewed in a horizontal direction and in the direction A (Figures 4 and 6), the top face of each intermediate piece 35 is located at a distance (1.5 to 2.5 cms) below the bottom face of the locking ring 51 of the adjacent driving units 36 in order to minimize any hindrance of the passage of mown crop to the rear over and across the intermediate pieces. The distance between the top side of the part of the main drive shaft 41 in each intermediate piece 35 and the top face of the intermediate piece itself is mainly occupied by the wall thickness of the intermediate piece 35. This is another advantage of the small diameter of the main drive shaft 41 allowed by the comparatively high speed of rotation of this shaft.

As stated above the cutters 10 (two of which are shown on each cutting unit 8) are arranged on the units outer, lower rim of the cutter holder 54 so as to be other freely pivotable at their inner ends about a pivotal axis parallel to the axis 9. The cutters 10 have a twisted form so that, with respect to the direction of rotation, the leading edge of each cutter is at a lower level than the trailing edge.

The mowing machine described may be assembled in various ways in accordance with the user's needs. The intermediate pieces 35 and the driving units 36 (on which the cutting units are or will be mounted) are alternately mounted on the tie rod 42, for example, first an intermediate piece 35, using the associated holes 8 (through which passes the tie rod 42), then a driving unit 36 (also using the holes 38), then another intermediate piece 35, and so on until the desired number of driving units and cutting units 8 is attained. The tubular tie rod 42 is preferably a close fit in the holes 36 (Figures 5 and 8), but this is not essential. In assembling the intermediate pieces and driving units the location of these components relative to each other is ensured by the locating rings 61 (Figure 6) each abutting the Seeger ring (circlip) 62 of the adjacent driving unit and abutting a shoulder in the adjacent intermediate piece. Such a shoulder is also provided in the collar 30 of the gear box 26 (Figure 4). By means of these locating rings 61 the relative positions of the intermediate pieces and the driving units as well as of the first intermediate piece and the collar 30 are accurately established. Since the contacting faces of the intermediate pieces and the driving units are smooth, relative rotation of these components might occur, but this is prevented by the presence of the draw rod 42 at a distance behind the locating rings 61 and by the high compressive force exerted by the tie rod on the intermediate pieces and the driving units, this force being satisfactorily absorbed by the cast-iron housings of the intermediate pieces and driving units, it is advisable to pass the main drive shaft 41 beforehand through a number of intermediate pieces and driving units; the end of the shaft 41 may be bevelled to make its insertion easier. The shaft 41 accurately fits in the square hole in each gear wheel 46. In this way the flexible shaft 41 can be readily passed through the intermediate pieces and driving units.

A first possibility of varying the characteristics of the mowing machine is to use intermediate pieces 35 of different lengths, measured in the direction B. It is also possible to use intermediate pieces 35 of equal lengths and to vary the distances between the driving units by arranging filling pieces at the ends of the intermediate pieces. In this manner the distance between the rotary axes 9 of the cutting units 8 can be varied. This may be determined by the choice of the directions of rotation of neighbouring cutting units 8. Two adjacent cutting elements having the same sense of rotation have cutters whose paths must not overlap to any appreciable extent. If a standard length of the cutter is used, the length of the intermediate piece located between the driving units concerned is chosen to be larger than in other cases. Alternatively, the length of the intermediate piece may remain the same, but then shorter cutters must be used. When two adjacent driving units rotate in opposite directions, the cutters can overlap considerably in accordance with the desired local mowing effect. When the standard length of the cutters of the last-mentioned cutting elements is used a shorter intermediate piece 35 may be used between the two driving units, or, if comparatively long cutters are employed, the intermediate piece can be of standard length. Otherwise, if larger diameters of some or all cutting elements and larger diameters of the circles described by the cutter tips are desired, longer intermediate pieces 35 have to be used so that higher cutting speeds of the cutters can be attained. Then cutter holders 54 of larger diameter are used; in their central parts they have the same square recesses receiving the square elevated part 55. The later possibility thus provides a second variation in assembling the mowing machine.

It is also possible to select the direction of rotation of each cutting unit 8. As stated above with reference to Figure 6 the gear wheel 46 together with its integral sleeve 64 can be taken out of the driving unit 36 by removing the locating ring 61, the Seeger ring (circlip) 62 and the bearing 60. Figure 6 shows the gear wheel on the left-hand side of the housing of the driving unit; this disposition determines the direction of rotation. When the removed parts 46 and 64 are inserted from the right-hand side of the housing so that the gear wheel 46 engages the right-hand side of the gear wheel 47, the cutting unit mounted on the driving unit will be driven in the opposite direction of rotation. For this purpose the end of the sleeve 64 away from the gear wheel 46 is moved to the right-hand side of the housing of the driving unit and the shoulder-like part is caused to bear on the inner race of the bearing 60 on the left-hand side. Then on the right-hand side the bearing 60 is inserted, to abut the shoulder near the cavity 75. Finally, the Seeger ring (circlip) 62 is inserted at the right-hand side and the locating ring 61 is fitted so as to locate the intermediate piece on the right-hand side. These operations are simple to carry out not only by the manufacturer of the machine but even by a dealer or the user himself. Of course driving units having existing dispositions of gear wheel 46 relative to gear wheel 47 can be threaded in a different order of succession onto the tie rod 42.

The mowing machine described can thus be modified to vary not only the distance between the rotary axes of the cutting units but also the diameters of the circles described by the tips of the cutters and the relative directions of rotation of adjacent cutting units. When assembling the mowing machine in the manner described above attention should, of course, be paid to the relative directions of rotations of the cutters, as viewed on plan. The cutters of two adjacent cutting units will, in general, be disposed so that they are out of phase by a right angle with respect to one another. It is important for the numbers of teeth of the gear wheels 46 and 47 of each driving unit to have a given ratio. The ratio between the numbers of teeth of the gear wheels 47 and 46 need not be an integer, but should preferably be slightly higher or lower than an integer. In the embodiment described the gear wheel 47 has 33 teeth and the gear wheel 46 has 16 teeth. When a driving unit is slipped from the right-hand end onto the drive shaft 41 (so fixing the square elevated part 55 with respect to the length of the shaft 41) and subsequently an intermediate piece 35 is mounted on the shaft, the shaft 48 of the next driving unit can be turned by hand before it is slipped onto the shaft 41 until the square part 55 and the square recess in the gear wheel 46 have the same positions as those of the driving unit already mounted. Owing to the aforesaid ratio between the numbers of teeth of the gear wheels 46 and 47 a few turns of the shaft 48 will be sufficient to cause both the square elevation 55 and the square recess in the gear wheel 46 to be in the same positions as those of the driving unit already mounted. Afterwards the cutter holder 54 is fitted on the square part 55 in a manner such that the associated cutters are out of phase by a right angle with respect to those of the driving unit slipped on previously.

Apart from the aforesaid advantages of the integral drive shaft 41, such a construction is preferred over an assembly of shaft portions for other reasons. For example, the individual portions of a composite shaft would have to be coupled together by coupling pieces (for example with a splined connection between the shaft portions and the coupling pieces) so that during operation due to the varying torsional moment in the shaft the shaft portions tend to "bite" the coupling pieces.

Preferably the drive shaft 41 is subjected to a surface treatment to avoid corrosion of the shaft surface; otherwise the passage of the square recesses in the gear wheels 46 of the driving units over the shaft might become difficult. Such a surface treatment may be cadmium- or chromium-plating or the like.

As viewed from the side (Figure 8) the top face of each intermediate piece 35 slopes upwardly from front to rear (see the dashed line 77 representing the front portion of the top face and the solid line 78 representing the rear portion; the solid line located above the dashed line 77 represents an integrally cast ear of the casting near the two ends of the intermediate piece 35, as is also shown, for example, in Figure 4). Crop passing across the top face of the intermediate piece to the rear, when the intermediate piece is located, for example, between two cutting units 8 rotating in opposite directions, is guided by the upward slope of the rear part 78 in upwardly and rearwardly inclined direction as a result of which the crop is airily deposited on the ground.

Figure 9 schematically shows a number of cutting units 8, which have been assembled in the manner described above to give a desired sequence of the various relative distances between the neighbouring rotary axes 9 and for the directions of rotation of the cutting units. The three cutting units on the left-hand side of Figure 9 all rotate in the same sense i.e. clockwise, while the three cutting units on the right-hand side of the machine all rotate in the opposite direction; e.g. anti-clockwise.

The mown crop is conveyed from the two ends of the row of cutting units towards the centre of the machine and is deposited to the rear over and across the respective intermediate piece 35 in the form of a swath by two central cutting units which rotate in opposite directions. In this embodiment all the mown crop is passed between only two cuffing units so that it is useful in this case for the intermediate piece arranged between the two cutting units driven in opposite senses to be relatively long compared with the other intermediate pieces 35, or for auxiliary pieces to be provided. The embodiment shown in Figure 9 is only given by way of example, and the relative dispositions may be different. For example, on the left-hand side there could be two cutting units rotating clockwise, the other four cutting units rotating anti-clockwise, but many other combinations of directions of rotation and relative distances are also possible. In the embodiment shown in Figures 1 and 9 the mowing machine comprises six cuffing units 8 each having a mowing circle of 30 cms diameter, when rotating in the same direction, and of 35 cms diameter when rotating in opposite directions, the distance between the rotary axes 9 being about 30 cms and the overall cutting width being 1.8 ms. The length of the main drive shaft 41 is in this case about 165 cms. For two adjacent driving units 36 rotating in the same direction, the distance between the gear wheels 46 is then, of course, also 30 cms. For two driving units driven in opposite directions, the distance between the associated gear wheels 46 is about 38 cms, since the gear wheel 46 of one of the two driving units (see Figure 6) is put at the right-hand side of the driving unit in its mirror-image position. This means that torsional deformation of the shaft length between the gear wheels 46 of the driving units driven in opposite senses is greater and hence there is more resilience than between the units driven in the same sense so that jolting loads occurring particularly in driving units driven in opposite directions (as in the middle of Figure 9) can be better absorbed.

The mowing machine described is particularly suitable for being hitched not only to the rear lift of a tractor but also to a front lift, in which case the gear box 26 need only be arranged in a mirror-image position with respect to a plane at right angles to the plane of the drawing in Figure 4 (particularly the collar 30). A required change of direction of rotation of the cutting elements can be carried out in the manner described above. The mowing machine is particularly intended to mow agricultural crop, for example, grass and clover.

## Claims

1. A mowing machine comprising a plurality of rotary cutting units (8) mounted to a main frame so as to be drivable about upwardly extending axes (9), wherein (a) the main frame (6) extends, during operation of the machine, transverse to the operative travel (A) of the machine and comprises at least one driving unit (36) having a housing, b) said driving unit supports at least one cutting unit (8) and drive means therefore, and c) the driving unit comprises a releasable shoe (72), extending forwardly, with respect to the normal direction of operative travel of the machine, along the bottom of the driving unit to its front side, protecting means (74) being situated in front of the driving unit, below the cutting unit, the protecting means (74) and the front side of the shoe (72) being rigidly secured together, wherein the releasable shoe (72) is mounted, with respect to the normal direction of operative travel of the machine, to the rear side of the driving unit and is extending from the rear side of the driving unit to its frontside, and in that the protecting means (74) and the front side of the shoe (72) are fitted around and over the forwardly protruding leading edge of the housing of the driving unit (36) and the shoe is curved upwardly behind the rear wall of the driving unit and is fastened only at the said rear wall by two bolts, such that the shape of the shoe (72) generally follows the form of the front, underneath and rear surfaces of the housing of the driving unit (36) and that only the shoe is merely hooked around the leading edge.

2. A mowing machine as claimed in claim 1, characterized in that the leading edge (71), around which the shoe and the protecting means fit, is arcuated and protrudes in front of the leading edges of intermediate pieces (35) between which a driving unit (36) is arranged and with which the driving unit forms at least part of the main frame (6).

3. A mowing machine as claimed in claim 1 or 2, characterized in that the front side of the driving unit is inclined from the leading edge downwards from the front to the rear and the shoe (72) slopes downwards and rearwards from its leading edge over the bottom face of the driving unit.

4. A mowing machine as claimed in any preceding claim, characterized in that the outer boundary of the protecting means (74) approximately corresponds with the outer edge of a cutter holder (54) of the cutting unit (8).

5. A mowing machine as claimed in claim 4, characterized in that the protecting means (74) is situated below the boundary of the holder (54) of the cutting unit (8) at a distance of about 2 to 3 cms.

6. A mowing machine as claimed in any preceding claim, characterized in that a driving unit comprises only one cutting unit and one shoe with a protecting means.

7. A mowing machine as claimed in claim 6, characterized in that one or more driving units (36), each with a shoe and a protecting means (72), are coupled as separate units by a tie member (42) with separate intermediate pieces (35) to form the main frame (6).

## Patentansprüche

1. Mähmaschine mit einer Mehrzahl rotierender Schneideinheiten (8), die an einem Hauptrahmen um aufwärts gerichtete Achsen (9) drehbar angeordnet sind, wobei a) der Hauptrahmen (6) sich im Betrieb der Maschine quer zu deren Arbeitsrichtung (A) erstreckt und mit mindestens einer Antriebseinheit (36) mit einem Gehäuse versehen ist, b) die Antriebseinheit mindestens eine Schneideinheit (8) und Antriebsglieder für sie trägt, und c) die Antriebseinheit einen abnehmbaren Schuh (72) aufweist, der sich - bezogen auf die normale Arbeitsrichtung der Maschine - nach vorn an der Unterseite der Antriebseinheit entlang zu deren Vorderseite erstreckt, wobei eine Schutzvorrichtung (74) vor der Antriebseinheit unter der Schneideinheit angeordnet ist, wobei die Schutzvorrichtung (74) und die Vorderseite des Schuhes (72) starr miteinander verbunden sind, wobei der abnehmbare Schuh (72) in bezug auf die normale Arbeitsrichtung der Maschine an der Rückseite der Antriebseinheit angebracht ist und sich von der Rückseite der Antriebseinheit zu deren Vorderseite erstreckt, und wobei die Schutzvorrichtung (74) und die Vorderseite des Schuhes (72) den vorspringenden vorderen Rand des Gehäuses der Antriebseinheit (36) umfassend und übergreifend angebracht sind und der Schuh hinter der Rückwand der Antriebseinheit nach oben abgebogen und nur an der Rückwand durch zwei Bolzen befestigt ist, derart, daß die Form des Schuhes (72) im wesentlichen der Form der Vorderseite, der Unterseite und der Rückseite des Gehäuses der Antriebseinheit (36) entspricht, und wobei nur der Schuh um den vorderen Rand lediglich herumgebogen ist.

2. Mähmaschine nach Anspruch 1,
dadurch gekennzeichnet, daß der vordere Rand (71), der von dem Schuh und der Schutzvorrichtung passend umgeben ist, bogenförmig ist und nach vorne über den vorderen Rand von Zwischenstücken (35) übersteht, zwischen denen eine Antriebseinheit (36) angeordnet ist, und mit denen die Antriebseinheit mindestens einen Teil des Rahmens (6) bildet.

3. Mähmaschine nach Anspruch 1 oder 2,
dadurch gekennzeichnet, daß die Vorderseite der Antriebseinheit vom vorderen Rand aus nach unten und hinten abgeschrägt ist, und daß der Schuh (72) von seinem vorderen Rand aus nach unten und hinten sowie über die Bodenfläche der Antriebseinheit verläuft.

4. Mähmaschine nach einem der vorhergehenden Ansprüche, dadurch gekennzeichnet, daß die Außenkontur der Schutzvorrichtung (74) dem Außenrand eines Messerhalters (54) der Schneideinheit (8) etwa entspricht.

5. Mähmaschine nach Anspruch 4,
dadurch gekennzeichnet, daß die Schutzvorrichtung (74) unter dem Rand des zur Schneideinheit (8) gehörigen Halters (54) im Abstand von etwa 2 bis 3 cm angeordnet ist.

6. Mähmaschine nach einem der vorhergehenden Ansprüche, dadurch gekennzeichnet, daß eine Antriebseinheit nur eine Schneideinheit und nur einen Schuh mit Schutzvorrichtung aufweist.

7. Mähmaschine nach Anspruch 6,
dadurch gekennzeichnet, daß eine oder mehrere Antriebseinheiten (36), jeweils mit einem Schuh und einer Schutzvorrichtung (72), als separate Einheiten mittels eines Verbindungsgliedes (42) mit Zwischenstücken (35) zur Bildung des Hauptrahmens (6) verbunden sind.

## Revendications

1. Faucheuse comprenant une pluralité d'unités de coupe rotatives (8), montées sur un châssis principal de manière à pouvoir être entraînées autour d'axes (9) s'étendant vers le haut, dans laquelle a) le châssis principal (6) s'étend, pendant le fonctionnement de la machine, transversalement au sens de marche (A) de la machine en fonctionnement et comprend au moins une unité d'entraînement (36) pourvue d'un boîtier, b) ladite unité d'entraînement supporte au moins une unité de coupe (8) et ses moyens d'entraînement, et c) l'unité d'entraînement comporte un patin démontable (72) s'étendant, par rapport au sens normal de marche de la machine en fonctionnement, à partir du côté postérieur de l'unité d'entraînement le long du côté inférieur de celle-ci jusqu'au côté antérieur de l'unité d'entraînement, un moyen de protection (74) étant situé en avant de l'unité d'entraînement, sous l'unité de coupe, le moyen de protection (74) et le côté antérieur du patin (72) étant rigidement fixés ensemble, tandis que le patin démontable (72) est monté, par rapport au sens normal de marche de la machine en fonctionnement, sur le côté postérieur de l'unité d'entraînement et s'étend à partir du côté postérieur de l'unité d'entraînement jusqu'au côté antérieur de l'unité d'entraînement, et un moyen de protection (74) et le côté antérieur du patin (72) sont ajustés autour de et sur le bord antérieur, faisant saillie vers l'avant, de l'unité d'entraînement (36) et le patin est incurvé vers le haut derrière la paroi postérieure de l'unité d'entraînement et est fixé à l'unité d'entraînement par deux boulons seulement à la paroi postérieure de celle-ci, de sorte que la forme du patin (72) correspond approximativement à la forme des faces antérieures, inférieures et postérieures du boîtier de l'unité d'entraînement (36) et le patin est seulement en forme de crochet autour du bord antérieur.

2. Faucheuse selon la revendication 1, caractérisée en ce que le bord antérieur (71), autour duquel s'ajustent le patin et le moyen de protection, est arrondi et est saillant en avant des bords antérieurs de pièces intérmédiaires (35) entre lesquelles est disposée une unité d'entraînement (36) et avec lesquelles l'unité d'entraînement forme au moins partie du chassis principal (6).

3. Faucheuse selon la revendication 1 ou 2, caractérisée en ce que le côté antérieur de l'unité d'entraînement s'incline à partir du bord antérieur vers le bas d'avant en arrière, et le patin (72) s'incline vers le bas et vers l'arrière à partir de son bord antérieur sur la face inférieure de l'unité d'entraînement.

4. Faucheuse selon l'une quelconque des revendications précédentes, caractérisée en ce que la limite extérieure du moyen de protection (74) correspond approximativement au bord extérieure d'un porte-couteaux (54) de l'unité de coupe (8).

5. Faucheuse selon la revendication 4, caractérisée en ce que le moyen de protection (74) est situé sous la limite du porte-couteaux (54) de l'unité de coupe (8) à une distance d'environ 2 à 3 cm.

6. Faucheuse selon l'une quelconque des revendications précédentes, caractérisée en ce qu'une unité d'entraînement comporte une seule unité de coupe et un patin avec un moyen de protection.

7. Faucheuse selon la revendication 6, caractérisée en ce qu'une ou plusieurs unités d'entraînement (36), chacune avec un patin (72) et un moyen de protection (74) sont assemblées en tant qu'unités séparées par un tirant (42) avec des pièces intermédiaires séparées (35) pour former le chassis principal (6).
